# FASCICULE DE BREVET EUROPEEN

(11) **EP 1 550 585 B1**
(45) Date de publication et mention de la délivrance du brevet: **12.03.2008**
(21) Numéro de dépôt: 04293048.7
(22) Date de dépôt: 20.12.2004
(51) Int. Cl.: B60R 11/02, H04M 1/04

(54) **Dispositif de support d'un téléphone mobile**
Vorrichtung des Trägers eines beweglichen Telefonhalters
Holder of a mobile telephone

(30) Priorité: 29.12.2003 FR 0315512
(43) Date de publication de la demande: 06.07.2005
(73) Titulaire: Sagem Communications, 75015 Paris (FR)
(72) Inventeur: Dumont, Jérémie, 75015 Paris (FR)
(74) Mandataire: Lavialle, Bruno François Stéphane

(56) Documents cités:
- EP-A- 1 086 858
- US-A- 5 253 292
- US-A- 5 995 622
- US-B1- 6 176 401

## Description

La présente invention concerne un dispositif support d'un téléphone mobile.

### ARRIERE-PLAN DE L'INVENTION

Un téléphone mobile possède généralement une face équipée d'un clavier et d'un écran.

Certains de ces téléphones sont utilisés dans les gares de triages par des opérateurs chargés du débranchement des véhicules ferroviaires et de la formation des trains. Chaque opérateur porte un téléphone mobile qui lui permet de communiquer avec les conducteurs des machines déplaçant les véhicule ferroviaires. Ces téléphones mobiles comportent en outre sur un côté du téléphone, un bouton d'appel d'urgence et un bouton de présence qui doit être sollicité périodiquement par l'opérateur sans quoi les opérations de triage sont immédiatement interrompues pour le cas où l'opérateur aurait eu un accident.

Afin de laisser à l'opérateur sa liberté de mouvement, le téléphone mobile est disposé dans un étui empêchant une manipulation involontaire du clavier, seuls le bouton d'appel d'urgence et le bouton de présence restant accessibles. Quand l'utilisateur souhaite passer un appel il est donc nécessaire qu'il sorte son téléphone de l'étui pour avoir accès au clavier et passer un appel, ce qui constitue une gêne à l'utilisation du téléphone. En outre, lorsqu'il tient le téléphone, l'utilisateur n'a plus les deux mains libres pour effectuer une manoeuvre d'urgence et sa réactivité est donc affectée.

Il est connu des documents US-A-5 995 622 et EP-A-086 858 des supports de téléphone mobile comportant une partie fixe et une partie inclinable entre une position d'utilisation en appui contre la partie fixe et une position de mise en place du téléphone mobile, position dans laquelle ladite partie est inclinée par rapport à la partie fixe. Dans tous les cas, le téléphone est positionné dos à la partie fixe de manière que le clavier soit toujours accessible.

### OBJET DE L'INVENTION

Un objet de l'invention est de proposer un dispositif permettant tout à la fois de protéger le clavier contre des manipulations involontaires et de permettre une utilisation aisée du clavier lorsque l'utilisateur le souhaite.

### BREF EXPOSE DE L'INVENTION

Selon l'invention, on prévoit, un dispositif support d'un téléphone mobile ayant une face équipée d'un clavier, le dispositif support comprenant une embase comportant des moyens d'accrochage à un utilisateur et un organe rigide de réception du téléphone, l'organe de réception étant relié à l'embase par une articulation pour pivoter entre au moins une position repliée dans laquelle le téléphone s'étend en regard de l'embase de façon contiguë à celle-ci avec le clavier du téléphone tourné vers l'embase, et une position déployée dans laquelle le téléphone forme avec l'embase un angle suffisant pour avoir accès au clavier.

Ainsi, dans la position repliée de l'organe de réception, le téléphone s'étend contre l'utilisateur et se trouve naturellement peu exposé aux chocs. Lorsque l'organe de réception est dans sa position déployée, l'accès au clavier et à l'écran du téléphone mobile est dégagé. L'utilisateur peut ainsi d'une seule main composer un numéro sur le clavier sans devoir tenir son téléphone. Il conserve donc les deux mains libres si une manoeuvre d'urgence doit être effectuée.

Avantageusement, le dispositif comprend un bouton de commande de l'articulation mobile entre une position de blocage de l'articulation dans laquelle il est rappelé élastiquement et une position de libération de l'articulation.

Le risque d'un déplacement accidentel de l'organe de réception vers la position déployée est ainsi limité.

De préférence, l'organe de réception dans sa position repliée est désaxé par rapport à l'articulation.

Ainsi, lorsque le bouton de commande est amené dans la position de libération, l'organe de réception tombe dans sa position déployée sous l'effet de son poids et de celui du téléphone. Une seule main suffit alors pour mettre l'organe de réception dans sa position déployée.

Avantageusement, dans le mode de réalisation préféré, lorsqu'un effort prédéterminé est exercé vers le bas sur le téléphone reçu dans l'organe de réception dans sa position déployée, l'organe de réception pivote vers une position rabattue dans laquelle l'organe de réception pend vers le bas.

On évite de la sorte qu'un effort trop important entraîne une détérioration du dispositif support ou du téléphone.

Selon une caractéristique particulière, l'organe de réception comprend un bouton amplificateur qui est monté sur un côté de l'organe de réception en regard d'un bouton du téléphone et qui présente une surface de contact avec le bouton du téléphone au plus égale à une surface du bouton du téléphone, et une surface d'appui orientée vers l'extérieur de l'organe de réception et supérieure à la surface du bouton du téléphone.

Ceci facilite l'actionnement du bouton par un utilisateur portant des gants.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue de côté d'un dispositif support conforme à l'invention équipé d'un téléphone mobile,
- la figure 2 est une vue en perspective de ce dispositif équipé du téléphone mobile,
- la figure 3 est une vue en perspective de ce dispositif sans le téléphone mobile,
- la figure 4 est une vue partielle de ce dispositif.

### EXPOSE DETAILLE D'UN MODE DE REALISATION

En référence aux figures, le dispositif support conforme à l'invention, portant la référence générale 1, est destiné à être utilisé avec un téléphone mobile, généralement désigné en 100, de type GSM-R (pour « Railway »).

Le téléphone mobile 100 comprend de façon connue en soi un boîtier 101 ayant une façade 102 sur laquelle débouchent un microphone 103 et un haut-parleur 104 respectivement situés en partie inférieure 105 et en partie supérieure 106 du boîtier 101 lorsque le téléphone mobile 100 est en position verticale. Un clavier 107 et un écran 108 s'étendent également sur la façade 102 du boîtier 101. Le téléphone mobile 100 comprend en outre des boutons latéraux -à savoir un bouton de prise de parole, un bouton d'appel d'urgence, un bouton de présence et un bouton de volume- qui sont montés sur les côtés longitudinaux du boîtier 101 selon un agencement connu en lui-même (ces boutons ne sont pas visibles sur les figures).

Le dispositif support 1 comprend une embase 2, ici une platine en matériau rigide, qui comprend des trous de passage de rivets de fixation à un harnais 110 destiné à équiper un utilisateur 111.

Le dispositif support comprend un organe de réception du téléphone qui est monté sur l'embase 2.

L'organe de réception comprend une coque généralement désignée en 3 ayant des bords latéraux 4 en regard de telle manière que la coque 3 enveloppe la partie arrière du téléphone mobile 100 en remontant sur les côtés de celui-ci. Une came 10 est montée captive pour pivoter dans le fond de la coque 3 et être manoeuvrable depuis l'extérieur de la coque 3 afin d'être engagée dans un logement correspondant du téléphone mobile 100 pour appliquer le téléphone contre le fond de la coque et y fixer le téléphone mobile 100. La came 10 a ici la forme d'un demi-disque ayant des faces opposées convergentes.

Les bords latéraux 4 sont équipés de boutons 5 destinés à s'étendre en regard des boutons latéraux du téléphone mobile 100 lorsque ce dernier est reçu dans la coque 3.

Chaque bouton 5 présente une surface de contact 6 orientée vers l'intérieur de la coque 3 pour coopérer avec le bouton latéral correspondant du téléphone mobile 100 et une surface d'appui 7 orientée vers l'extérieur de la coque 3 pour permettre à l'utilisateur d'enfoncer le bouton 5.

La surface de contact 6 a une aire au plus égale à une surface du bouton latéral correspondant et appartient ici à une saillie 8 du bouton 5. La surface d'appui 7 a une aire supérieure à la surface d'actionnement du bouton latéral correspondant. La surface d'actionnement de ce bouton latéral est ainsi amplifiée, ce qui facilite sa manipulation par un opérateur portant des gants ou lorsque la situation exige une manipulation rapide ou "automatique" du bouton par l'opérateur.

Chaque bouton 5 est associé à un organe de rappel élastique non représenté maintenant le bouton 5 en appui contre le bouton correspondant du téléphone mobile 100. Ainsi, le moindre enfoncement d'un bouton 5 se traduit par un enfoncement du bouton correspondant du téléphone mobile. L'organe de rappel élastique est un ressort 18 intercalé entre le bouton 5 et le bord latéral 4 mais peut être aussi une lame élastique ayant une extrémité solidaire soit du bord latéral 4 soit du bouton 5 et une extrémité libre en appui soit contre le bouton 5 soit contre le bord latéral 4. L'effort de rappel est inférieur à l'effort nécessaire à l'enfoncement du bouton correspondant du téléphone.

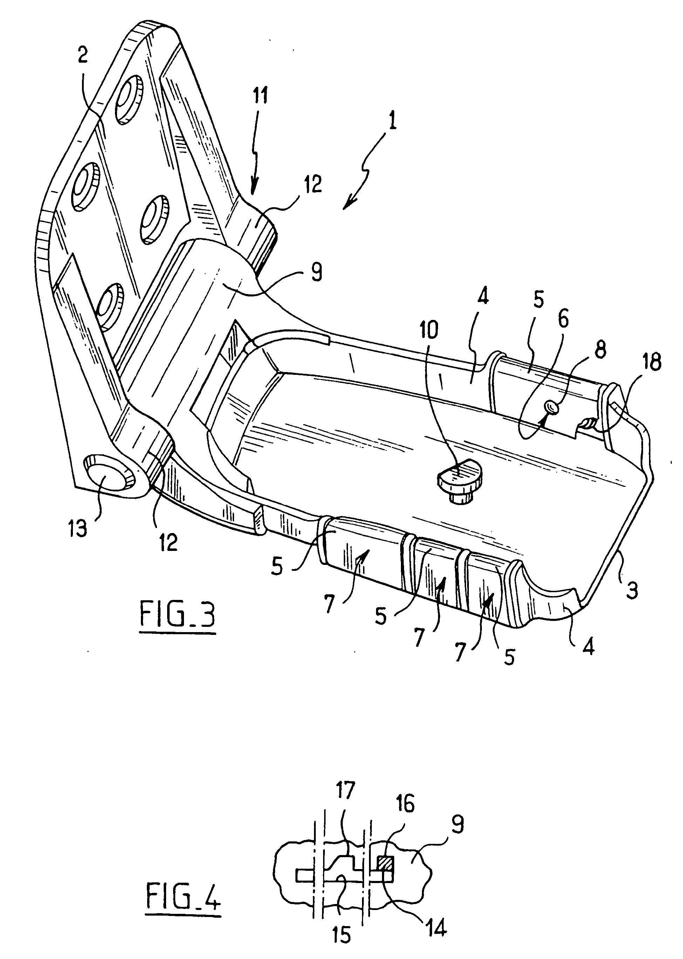

L'organe de réception 3 possède une extrémité 9 qui est reliée à l'embase 2 par une articulation 11 qui s'étend le long du bord inférieur de l'embase par référence à la position d'accrochage de l'embase sur un utilisateur. L'articulation il est ici formée de deux parties 12 de la platine 2 formant des chapes entre lesquelles s'étend l'extrémité 9. Un tronçon d'axe (non visible aux figures) et un bouton de commande 13 sont engagés dans les parties 12 et l'extrémité 9. Le bouton de commande 13 est fixe en rotation par rapport à la partie 12 qui le reçoit et coulisse entre une position de blocage de l'articulation 11 dans laquelle il est rappelé élastiquement et une position de libération de l'articulation 11. Le bouton de commande possède un ergot 14, externe, reçu dans une rainure 15 interne et circonférentielle de l'extrémité 9. Dans cette rainure 15 débouchent deux encoches 16, 17 axiales destinées à recevoir l'ergot 14 lorsque le bouton de commande 13 est dans sa position de blocage. L'encoche 16 comprend des flancs perpendiculaires à la rainure 15 et l'encoche 17 comprend du côté de l'encoche 16 un flanc perpendiculaire à la rainure 15 et du côté opposé un flanc incliné (voir la figure 4).

La coque 3 est ainsi montée sur la platine 2 pour pivoter et possède trois positions détaillées ci-après.

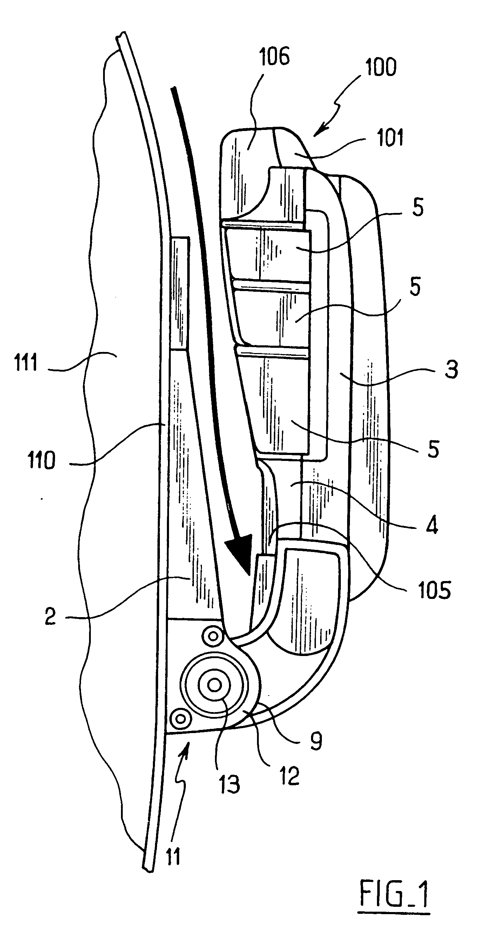

Dans une première position, dite position repliée, représentée à la figure 1, la coque 3 sensiblement verticale supporte le téléphone mobile 100 de façon sensiblement verticale avec la façade 102 en regard de la platine 2. Dans cette position, la coque maintient la façade 102 écartée de la platine 2. La platine définit ainsi avec le téléphone un conduit sonore qui s'étend depuis la partie supérieure 106 du téléphone mobile 100 jusqu'au microphone 103. Le conduit sonore est ouvert au niveau de la partie supérieure 106 du téléphone mobile 100.

Le clavier 107 et l'écran 108 font face à la platine 2 et sont protégés des agressions extérieures tels que les chocs. L'utilisateur peut quand même actionner les boutons latéraux du téléphone mobile 100 en enfonçant les boutons 5 de la coque 3. L'aire relativement grande de la surface d'appui 7 permet à l'utilisateur portant des gants d'actionner un des boutons 5 sans risquer d'actionner le bouton voisin par inadvertance.

On remarquera que, dans la position repliée, la majeure partie du poids de la coque 3 et du téléphone mobile 100 est désaxée par rapport à l'articulation 11 d'un côté de celle-ci opposé à la platine 2. Ce désaxage résulte d'un décentrement de l'extrémité 9 par rapport au plan général de la coque 3.

L'ergot 14 reçu dans l'encoche 16 bloque la coque 3 dans cette position.

En pressant le bouton de commande 13, l'utilisateur amène l'ergot 14 dans la rainure 15. Sous son propre poids et le poids du téléphone mobile 100 (le centre de gravité de cet ensemble étant désaxé comme expliqué ci-dessus), la coque 3 pivote vers sa deuxième position dite déployée et s'y arrête lorsque l'ergot 14 est repoussé dans l'encoche 17 par l'élément de rappel élastique du bouton de commande 13 dans sa position de blocage.

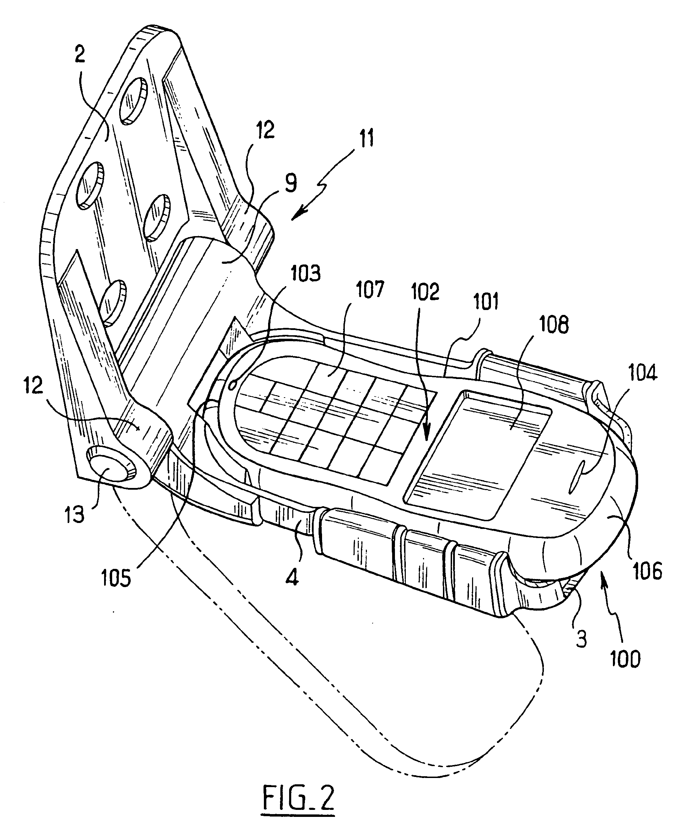

Dans la position déployée, représentée aux figures 2 et 3, la coque 3 est perpendiculaire à l'embase 2 et supporte le téléphone mobile 100 de façon sensiblement horizontale. L'accès au clavier 107 et à l'écran 108 est alors libre de sorte que l'utilisateur peut utiliser toutes les fonctionnalités de son téléphone.

Lorsqu'un effort est exercé vers le bas sur le téléphone reçu dans la coque 3 dans sa position déployée, il tend à faire glisser l'ergot 14 contre le flanc incliné de l'encoche 17 en comprimant l'élément de rappel élastique du bouton de commande 13. Si l'effort est suffisant pour amener l'ergot 14 dans la rainure 15, la coque 3 pivote vers une troisième position, dite position rabattue. On comprend que la pente du flanc incliné et l'effort exercé par l'élément de rappel élastique fixe le seuil d'effort nécessaire pour amener la coque 3 dans sa troisième position.

Dans sa position rabattue, représentée en trait mixte double à la figure 2, la coque 3 pend vers le bas.

Bien entendu, l'invention n'est pas limitée au mode de réalisation décrit mais englobe les variantes de réalisation dans le cadre défini par les revendications.

En particulier, le dispositif support de l'invention est utilisable avec tous les téléphones mobiles et notamment les téléphones mobiles grand public.

Le dispositif support 1 peut être accroché à l'utilisateur par des moyens auto-agrippants solidaires de la platine 2 ou par des lanières solidaires de la platine 2 et équipées de moyens d'accrochage comme des boucles ou des mousquetons. La platine 2 rigide, peut être remplacée par une embase souple.

Bien que l'invention ait été décrite en relation avec une articulation horizontale s'étendant le long du bord inférieur de l'embase, on peut également prévoir une articulation verticale s'étendant le long d'un bord latéral de l'embase.

L'organe de réception peut présenter des ouvertures permettant d'accéder directement aux boutons latéraux du téléphone en position verticale.

L'organe de réception peut être agencé pour permettre un clipsage du téléphone mobile.

Les moyens de blocage de l'articulation peuvent être différents de ceux décrits et comprendre par exemple une bille montée pour être mobile radialement dans l'extrémité 9 ou les parties 12 entre une position en saillie interne dans laquelle elle est rappelée élastiquement et une position escamotée, l'axe de rotation de l'articulation comprenant des renfoncements pour recevoir la bille en saillie interne et définir les positions de la coque.

## Revendications

1. Dispositif support d'un téléphone mobile (100) ayant une face équipée d'un clavier (107), le dispositif support comprenant une embase (2), **caractérisé en ce que** l'embase comporte des moyens d'accrochage à un utilisateur et le dispositif support comporte un organe rigide (3) de réception du téléphone, l'organe de réception (3) étant relié à l'embase (2) par une articulation (11) pour pivoter entre au moins une position repliée dans laquelle le téléphone s'étend en regard de l'embase (2) de façon contiguë à celle-ci avec le clavier du téléphone tourné vers l'embase (2), et une position déployée dans laquelle le téléphone forme avec l'embase (2) un angle suffisant pour avoir accès au clavier.

2. Dispositif selon la revendication 1, **caractérisé en ce que**, par référence à une position d'accrochage de l'embase (2) sur l'utilisateur, l'articulation (11) s'étend le long d'un bord inférieur de l'embase.

3. Dispositif selon la revendication 2, **caractérisé en ce qu'**il comporte des moyens de verrouillage (13) de l'organe de réception par rapport à l'embase selon au moins une position prédéterminée.

4. Dispositif selon la revendication 3, **caractérisé en ce que**, dans une position prédéterminée, l'organe de réception (3) est maintenu perpendiculaire à l'embase (2).

5. Dispositif selon la revendication 1, **caractérisé en ce qu'**il comprend un bouton (13) de commande de l'articulation (11) mobile entre une position de blocage de l'articulation dans laquelle il est rappelé élastiquement et une position de libération de l'articulation.

6. Dispositif selon la revendication 5, **caractérisé en ce que**, dans une position repliée, l'organe de réception (3) est désaxé par rapport à l'articulation (11).

7. Dispositif selon la revendication 4, **caractérisé en ce que** pour un effort prédéterminé vers le bas sur le téléphone, l'organe de réception (3) échappe aux moyens de verrouillage pour pivoter vers une position rabattue dans laquelle l'organe de réception pend vers le bas.

8. Dispositif selon la revendication 1, **caractérisé en ce que** l'organe de réception (3) comprend un bouton amplificateur (5) qui est monté sur un côté de l'organe de réception en regard d'un bouton du téléphone et qui présente une surface de contact (6) avec le bouton du téléphone au plus égale à une surface du bouton du téléphone et une surface d'appui (7) orientée vers l'extérieur de l'organe de réception et supérieure à la surface du bouton du téléphone.

9. Dispositif selon la revendication 8, **caractérisé en ce qu'**il comprend un organe de rappel élastique (28) du bouton amplificateur (5) en appui contre le bouton correspondant du téléphone.

10. Dispositif selon la revendication 1, **caractérisé en ce que** dans sa position repliée, l'embase définit avec le téléphone un conduit sonore qui s'étend depuis la partie supérieure du téléphone où le conduit est ouvert jusqu'à un microphone.

## Claims

1. A support device for supporting a mobile telephone (100) having a face fitted with a keypad (107), the support device comprising a base (2) and being **characterized in that** the base includes means for securing to a user, and the support device includes a cradle member (3) for receiving the telephone, the cradle member (3) being connected to the base (2) by a hinge (11) to pivot between at least a folded position in which the telephone extends facing the base (2) so as to be contiguous therewith, having the telephone keypad facing towards the base (2), and a deployed position in which the telephone co-operates with the base (2) to form an angle that is large enough to provide access to the keypad.

2. A device according to claim 1, **characterized in that**, with reference to a position in which the base (2) is secured to the user, the hinge (11) extends along a bottom edge of the base.

3. A device according to claim 2, **characterized in that** it includes locking means (13) for locking the cradle member relative to the base in at least one predetermined position.

4. A device according to claim 3, **characterized in that**, in a predetermined position, the cradle member (3) is held perpendicular to the base (2).

5. A device according to claim 1, **characterized in that** it includes a button (13) for controlling the hinge (11), the button being movable between a hinge-locking position into which the button is urged resiliently, and a hinge-release position.

6. A device according to claim 5, **characterized in that**, in a folded position, the cradle member (3) is off-axis relative to the hinge (11).

7. A device according to claim 4, **characterized in that** for a predetermined downward force on the telephone, the cradle member (3) escapes from the locking means to pivot towards a folded-down position in which the cradle member hangs downwards.

8. A device according to claim 1, **characterized in that** the cradle member (3) includes an enlarger button (5) mounted on a side of the cradle member facing a button of the telephone and presenting a contact area (6) with the telephone button that is not greater than the area of the telephone button, and a bearing surface (7) facing towards the outside of the cradle member and of area greater than the area of the telephone button.

9. A device according to claim 8, **characterized in that** it includes a resilient return member (28) for urging the enlarger button (5) to bear against the corresponding button of the telephone.

10. A device according to claim 1, **characterized in that**, in the folded position, the base co-operates with the telephone to define a sound duct that extends from the top portion of the telephone where the duct is open, to a microphone.

## Patentansprüche

1. Haltevorrichtung für ein Mobiltelefon (100), das eine Fläche hat, die mit einer Tastatur (107) versehen ist, wobei die Haltevorrichtung eine Grundplatte (2) umfasst, **dadurch gekennzeichnet, dass** die Grundplatte Befestigungsmittel für eine Befestigung an einem Nutzer umfasst und die Haltevorrichtung ein starres Aufnahmeelement (3) zur Aufnahme des Telefons umfasst, wobei das Aufnahmeelement (3) mit der Grundplatte (2) über eine Gelenkverbindung (11) verbunden ist, um sich zwischen mindestens einer eingeklappten Position, in der sich das Telefon gegenüber der Grundplatte (2) angrenzend an dieselbe erstreckt, wobei die Tastatur des Telefons zur Grundplatte (2) gerichtet ist, und einer aufgeklappten Position zu verschwenken, in der das Telefon mit der Grundplatte (2) einen Winkel bildet, der für einen Zugriff auf die Tastatur ausreicht.

2. Vorrichtung nach Anspruch 1, **dadurch gekennzeichnet, dass** sich die Gelenkverbindung (11) in Bezug auf eine Befestigungsposition der Grundplatte (2) am Nutzer entlang eines unteren Randes der Grundplatte erstreckt.

3. Vorrichtung nach Anspruch 2, **dadurch gekennzeichnet, dass** sie Verriegelungsmittel (13) zur Verriegelung des Aufnahmeelements relativ zur Grundplatte in mindestens einer vorgegebenen Position umfasst.

4. Vorrichtung nach Anspruch 3, **dadurch gekennzeichnet, dass** das Aufnahmeelement (3) in einer vorgegebenen Position senkrecht zur Grundplatte (2) gehalten wird.

5. Vorrichtung nach Anspruch 1, **dadurch gekennzeichnet, dass** sie einen Stellknopf (13) zum Einstellen der Gelenkverbindung (11) umfasst, der zwischen einer Blockierposition der Gelenkverbindung, in die er elastisch zurückgezogen wird, und einer Freigabeposition der Gelenkverbindung beweglich ist.

6. Vorrichtung nach Anspruch 5, **dadurch gekennzeichnet, dass** das Aufnahmeelement (3) in einer zusammengeklappten Position gegenüber der Gelenkverbindung (11) versetzt ist.

7. Vorrichtung nach Anspruch 4, **dadurch gekennzeichnet, dass** bei einer vorgegebene Kraft, die nach unten auf das Telefon ausgeübt wird, sich das Aufnahmeelement (3) aus den Verriegelungsmitteln löst, um in eine heruntergeklappte Position zu schwenken, in der das Aufnahmeelement nach unten hängt.

8. Vorrichtung nach Anspruch 1, **dadurch gekennzeichnet, dass** das Aufnahmeelement (3) eine Verstärkungstaste (5) umfasst, die auf einer Seite des Aufnahmeelements gegenüber einem Knopf des Telefons angebracht ist und eine Kontaktfläche (6) zum Kontakt mit dem Knopf des Telefons aufweist, die höchstens gleich einer Fläche des Knopfes des Telefons ist, sowie eine Betätigungsfläche (7), die zur Außenseite des Aufnahmeelements zeigt und größer als die Fläche des Knopfes des Telefons ist.

9. Vorrichtung nach Anspruch 8, **dadurch gekennzeichnet, dass** sie ein elastisches Rückstellelement (28) zum Rückstellen der Verstärkungstaste (5) in Anlage an den entsprechenden Knopf des Telefons umfasst.

10. Vorrichtung nach Anspruch 1, **dadurch gekennzeichnet, dass** die Grundplatte in der zusammengeklappten Position mit dem Telefon einen Schallkanal definiert, der sich von dem oberen Abschnitt des Telefons, wo der Kanal offen ist, bis zu einem Mikrophon erstreckt.
